# EUROPÄISCHE PATENTSCHRIFT

(11) **EP 2 663 591 B1**
(45) Veröffentlichungstag und Bekanntmachung des Hinweises auf die Patenterteilung: **11.07.2018**
(21) Anmeldenummer: 11801638.5
(22) Anmeldetag: 01.12.2011
(51) Int. Cl.: C08J 5/18, C08J 3/00, C08L 81/06, C08L 27/18

(54) **POLYPHENYLSULFON-POLYTETRAFLUORETYLEN-BLEND FÜR ANTI-WEAR-TAPES IN FLEXIBLEN ÖLFÖRDERLEITUNGEN**
POLYPHENYLSULFONE-POLYTETRAFLUOROETHYLENE BLEND FOR ANTI-WEAR TAPES IN FLEXIBLE OIL PIPES
MÉLANGE DE POLYPHÉNYLSULFONE ET DE POLYTÉTRAFLUOROÉTHYLÈNE POUR BANDES ANTI-USURE DANS DES OLÉODUCS FLEXIBLES

(30) Priorität: 14.01.2011 DE 102011002687
(43) Veröffentlichungstag der Anmeldung: 20.11.2013
(73) Patentinhaber: Evonik Röhm GmbH, 64293 Darmstadt (DE)
(72) Erfinder: BUMANN, Detlef, 64665 Alsbach-Hähnlein (DE); DREXLER, Albert, 64739 Höchst / Odw. (DE); WILLEMANN, Ricardo Luiz, Shanghai 200030 (CN)
(86) Internationale Anmeldenummer: PCT/EP2011/071453
(87) Internationale Veröffentlichungsnummer: WO 2012/095214

(56) Entgegenhaltungen:
- EP-A1- 0 444 589
- WO-A1-2011/006706
- GB-A- 2 441 066
- US-A- 5 916 958
- "Algoflon L & Polymist PTFE Micropowders", , 31. Januar 2012 (2012-01-31), XP55027004, Gefunden im Internet: URL:http://www.solvayplastics.com/sites/so lvayplastics/EN/specialty_polymers/FullyFl uorinatedPolymers/Pages/AlgoflonL_Polymist _Micropowders%20PTFE.aspx [gefunden am 2012-05-11]

## Beschreibung

### Gebiet der Erfindung

Die Erfindung betrifft eine verbesserte Mischung aus Polyphenylsulfon (PPSU) und Polytetrafluoretylen (PTFE) zur Herstellung von reibungsmindernden Bändern, die als reibungsvermindernde Zwischenlage von flexiblen Fluidleitungen, wie beispielsweise Ölförderleitungen, Verwendung finden (Anti-Wear-Tapes).

### Stand der Technik

GB 2 441 066 (Technip France) beschreibt ein flexibles, mehrschichtig aufgebautes Rohr zum Transport von Kohlenwasserstoffen. Zwischen den zumindest teilweise gegeneinander beweglichen Metallbändern ist ein reibungsverminderndes Kunststoffband angeordnet, dieses Kunststoffband besteht aus einem amorphen Polymer mit einer Glasübergangstemperatur zwischen 175 Grad C und 255 Grad C. Das Band besteht aus Polyphenylsulfon (PPSU) und einem perfluorierten Polymer und einem Polyetheretherketon (PEEK). In einer speziellen Ausführungsform der Erfindung wird eine Mischung aus 85 % Polyphenylsulfon (PPSU) mit 15 % Polytetrafluorethylen (PTFE) gemischt und zu Bändern von 1,5 mm Dicke und ca. 1m Breite extrudiert. Über die Molekulargewichte der verwendeten Kunststoffe wird keine Aussage getroffen.

US 2005/0229991 beschreibt eine ähnliche Anordnung wie GB '066, das Material der Zwischenschicht ist in diesem Fall ein elastomeres thermoplastisches Polymer, wie beispielsweise ein Styrol-Butadien-Styrol-Kautschuk (SBS), ein Styrol-Ethylen-Butadien-Styrol-Coplymer (SEBS) oder ein EPDM (Ethylen-Propylen-Dien) Copolymer, ferner ein Polybutadien, ein Polyisopren oder ein Polyethylen-Butylen-Copolymer.

In der deutschen Patentanmeldung DE102009027659.9 werden PTFE enthaltende PPSU mit einem PTFE-Anteil zwischen 1 und 15 Gew%, besonders bevorzugt zwischen 5 und 10 Gew% offenbart. Es wurde jedoch festgestellt, dass solche Zusammensetzungen in den angegebenen Bereichen über sehr schwankende mechanische Eigenschaften verfügen. Weiterhin wird in der DE102009027659.9 nicht aufgezeigt, wie man die Extrusion optimieren könnte, um die mechanischen Eigenschaften zu verbessern.

US 5,916,958 A beschreibt Herstellung von einem flammbeständigen thermoplastischen Material, bestehend aus:
(a) 100 Gewichtsteilen Poly(biphenylethersulfon);
(b) etwa 1 bis etwa 8 Gewichtsteile eines Fluorkohlenstoffpolymers;
(c) etwa 3 bis etwa 12 Gewichtsteile Titandioxid; und
(d) von 0 bis etwa 50 Gew .-%, bezogen auf die Gesamtzusammensetzung, zusätzliche Additive, ausgewählt aus festen Füllstoffen, Fasern, Verstärkungsmitteln, Stabilisatoren und Weichmachern.

In EP 0 444 589 A1 wird eine aromatische Polysulfonharzzusammensetzung mit verbesserter Dispergierbarkeit von Fluorkohlenstoffpolymer beschrieben, die 0,3 bis 50 Gewichtsteile eines Fluorkohlenstoffpolymers umfasst mit niedrigem Molekulargewicht bis zu seinem Molekülende fluoriert, mit einer Fließtemperatur von 350 ° C oder weniger und 100 Gewichtsteile eines aromatischen Polysulfonharzes.

WO 2011/006706 A1 beschreibt eine Mischung aus Polyphenylsulfon und Polytetrafluoretylen zur Herstellung von Bauteilen sowie ein Verfahren zu deren Herstellung. Der Gehalt der Mischung an PTFE beträgt zwischen 1 Gew.-% und 15 Gew.- % beträgt und der Gehalt der Mischung an PPSU liegt zwischen 99 Gew.-% und 85 Gew.-%.

### Aufgabe

Es bestand also angesichts des diskutierten Standes der Technik die Aufgabe, ein Material und/oder eine Materialmischung für die reibungsvermindernden Bänder in Ölförderleitungen zu finden, das den dort herrschenden Bedingungen (Temperaturen von ca. 130 °C, Drücke von 300 bis 400 bar) besser als die Materialien des Standes der Technik angepasst ist.

Insbesondere bestand die Aufgabe, ein verbessertes Verfahren zur Herstellung von reibungsvermindernden Bändern, enthaltend Kunststoffformkörper aus Polyphenylsulfon (PPSU) und Polytetrafluoretylen (PTFE), die gute und ausgeglichene mechanische Eigenschaften, insbesondere in, als auch quer zur Extrusionsrichtung aufweisen, zur Verfügung zu stellen.

### Lösung

Die Aufgaben wurden gelöst durch ein verbessertes Verfahren zur Herstellung von Kunststoffkörpern aus Polyphenylsulfon (PPSU) und Polytetrafluoretylen (PTFE). Dabei wurde festgestellt, dass besonders ausgeglichene mechanische Eigenschaften sowohl in, als auch quer zur Extrusionsrichtung gewährleistet werden können, wenn eine besonders feine Verteilung der PTFE-Partikel in der PPSU-Matrix sichergestellt wird. Es wurde ein überraschend einfaches Verfahren entwickelt, dass zu dieser feinen Verteilung des mit PPSU nicht mischbaren PTFE führt.

Es wurde überraschend festgestellt, insbesondere in Hinblick auf die Lehre der DE102009027659.9, dass eine feine Verteilung des PTFE im PPSU von ganz besonders großer Bedeutung bezüglich der mechanischen Eigenschaften und der Langlebigkeit dieser Blends als reibungsvermindernde Bänder in Ölförderleitungen ist. Bei einer schlechten Verteilung entstehen größere PTFE-Phasen, an deren Grenzen eine besonders verschlechterte Kohäsion innerhalb des Bandes auftritt.

Unter Bändern werden erfindungsgemäß im Weiteren bevorzugte Ausführungen der Kunststoffformkörper verstanden.

Damit wurde gefunden, dass nur eine sehr gleichmäßige Verteilung eines sehr feinteiligen PTFE über den gesamten Querschnitt in der PPSU Matrix den gewünschten Effekt über die Dauer des Einsatzes, bei der sich z.B. die Dicke des Tapes reduziert, und besonders ausgeglichene mechanische Eigenschaften sowohl in als auch quer zur Extrusionsrichtung gewährleistet.

Das erfindungsgemäße Verfahren ist insbesondere dadurch gekennzeichnet, dass
der Gehalt der Mischung an PTFE zwischen 4,0 Gew% und 6,0 Gew%, bevorzugt zwischen 4,5 Gew% und 5,5 Gew% beträgt. Entsprechend liegt der Gehalt an PPSU zwischen 94,0 Gew% und 96,0 Gew%,bevorzugt zwischen 95,5 Gew% und 94,5 Gew%.

Darüber hinaus ist es wichtig, dass ein sehr feinkörniges PTFE verwendet wird. Aus extrusionstechnischen Gründen darf dabei jedoch der Staubanteil wiederum nicht zu groß sein. Insbesondere geeignet für das erfindungsgemäße Verfahren ist ein PTFE, das vor der Extrusion einen Anteil kleiner 12 Vol%, bevorzugt von 8 bis 11 Vol% mit einer Partikelgröße kleiner 3 µm und einen Anteil von mindestens 88 Vol%, bevorzugt von mindestens 90 Vol% mit einer Partikelgröße kleiner 25 µm aufweist. Ganz besonders geeignet ist ein PTFE, welches zusätzlich eine spezifische Oberfläche zwischen 1,5 und 3,0 m²/g aufweist.

Die Partikelgrößen werden mittels Laserbeugung mit Geräten der Firma Microtrac bestimmt. Die spezifische Oberfläche wird mittels Stickstoffadsorption bestimmt.

Insbesondere zeichnet sich das erfindungsgemäße Verfahren darüber hinaus dadurch aus, dass das PTFE und das PPSU bei einer Temperatur zwischen 340 und 390 °C, bevorzugt zwischen 345 und 385 °C in einem ersten Extruder gemischt und das nach der ersten Extrusion erhaltene Granulat in einem zweiten Extruder bei einer Temperatur zwischen 345 und 390 °C, bevorzugt zwischen 375 und 390 °C zu Kunststoffformkörpern verarbeitet werden. Erfindungsgemäß wird die erste Extrusion zu den Granulaten bei einem Umgebungsdruckdruck zwischen 500 und 700 mbar, einer Drehzahl zwischen 220 und 270 min⁻¹, einer Schmelzetemperaturtemperatur zwischen 340 und 390 °C, bevorzugt zwischen 375 und 390 °C und einem Drehmoment zwischen 50% und 80%, bevorzugt zwischen 60% und 75%, bevorzugt in einem Zweischneckenextruder durchgeführt.

Überraschend wurde gefunden, dass PTFE bei solch hohen Temperaturen des Schmelzbereichs des PPSU ohne Zersetzung extrudierbar ist.

Bei dem zweiten Extrusionsschritt, der Weiterverarbeitung zu Kunststoffformkörper, handelt es sich in der Regel um eine Extrusion in einem Einschneckenextruder mit einer Drehzahl zwischen 40 und 60 min⁻¹.

Darüber hinaus betrifft die vorliegende Erfindung die Verwendung der Mischung bzw. der Kunststofformkörper, die nach dem erfindungsgemäßen Verfahren hergestellt wurden, zur Herstellung von Anti-Wear-Tapes.

Auch betrifft die vorliegende Erfindung insbesondere die Verwendung dieser Anti-Wear-Tapes in Leitungen für Fluids.

Diese Leitungen zeichnen sich durch eine besondere Langlebigkeit und mechanische Belastbarkeit aus.

### Das Polyphenylsulfon (PPSU)

Als PPSU wird ein Polyphenylsulfon eingesetzt, welches unter der Marke RADEL® R, z.B. als RADEL R 5000 nt von der Firma Solvay Advanced Polymers in den Handel gebracht wird.

Die Wiederholungseinheit des Polymers hat folgende Formel:

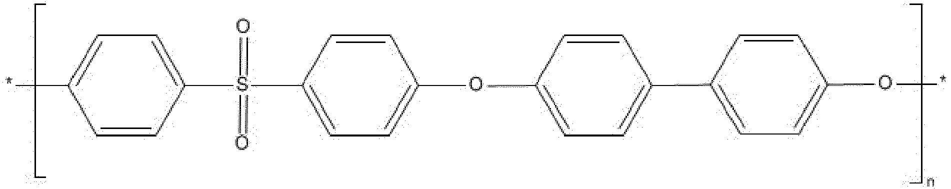

Es handelt sich hierbei um einen transparenten und äußerst wenig spannungsrissempfindlichen Hochleistungskunststoff mit extrem hoher Kerbschlagzähigkeit, auch nach Wärmealterung, und hervorragender chemischer Beständigkeit.

Er wird zur Herstellung von Bauteilen in der Medizintechnik, der chemischen Industrie und in der Sanitärinstallation verwendet. Die Dichte des Polymers beträgt 1,29 g/cm³, gemessen nach ISO 1183, die Streckspannung 70 MPa, gemessen nach ISO 527, die Reißdehnung 60%, gemessen nach ISO 527, das Zug-E-Modul 2.340 MPa, gemessen nach ISO 527, die Izod-Kerbschlagzähigkeit bei 23 Grad Celsius beträgt 49.4 KJ/m², gemessen nach ISO 180/1A, die Charpy- Kerbschlagzähigkeit bei 23 Grad Celsius beträgt 58,3 KJ/m², gemessen nach ISO 179/1eA.

Die Dielektrizitätszahl bei 50 Hz beträgt 3,4, gemessen nach IEC 60250, die Dielektrizitätszahl bei 1 MHz beträgt 3,5, gemessen nach IEC 60250, der dielektrische Verlustfaktor bei 50 Hz beträgt 6*10⁻⁴, gemessen nach IEC 60250. der dielektrische Verlustfaktor bei 1MHz beträgt 76*10⁻⁴, gemessen nach IEC 60250, die Durchschlagfestigkeit beträgt 15 kV/mm, gemessen nach IEC 60243-1, nach ASTM gemessen. Die dicke für die Durchschlagfestigkeit beträgt 3,2 mm, der spezifische Durchgangswiderstand nach IEC 60093 beträgt 9*10¹⁵ Ohm m.

Die Längenausdehnung längs/quer zur Fließrichtung beträgt 55*10⁻⁶ /K, gemessen nach ISO 11359, die Schmelz- bzw. Glasübergangstemperatur beträgt, gemessen nach ISO 11357 215 Grad Celsius, die Wärmeformbeständigkeit A beträgt 207 Grad Celsius, gemessen nach ISO 75 HDT/A (1,8 MPa), die Wärmeformbeständigkeit B beträgt 214 Grad Celsius, gemessen nach ISO 75 HDT/A (0,45 MPa), die maximale Temperatur (kurzzeitig) beträgt 180 Grad Celsius, die maximale Temperatur (dauernd) beträgt 160 Grad Celsius (Wärmealterung nach UL 746 (RTI) Mechanical W/O Imp., 40 000 h). Die minimale Anwendungstemperatur beträgt minus 100 Grad Celsius.

### Das Polytetrafluorethylen (PTFE)

Erfindungsgemäß muss bevorzugt ein Polytetrafluorethylen (PTFE) mit einem mittleren Molekulargewicht und einer kleinen Korngröße sowie besonders bevorzugt engen Korngrößenverteilung verwendet werden. Besonders solche PTFE eignen sich zur Einarbeitung in Engineering Plastics, die bei sehr hohen Schmelzetemperaturen verarbeitet werden und gute mechanische Eigenschaften sowie eine hohe Beständigkeit gegenüber Chemikalien wie Mineralölen aufweisen.

Als hochmolekulares Polytetrafluorethylen (PTFE) wird z.B. ein feinstkörniges Polytetrafluorethylen des Typs Zonyl® MP 1300 eingesetzt. Dieses PTFE eignet sich besonders als Additiv in Polymermischungen basierend auf HT-Thermoplaste.

### Beispiele

### Compoundierungsbeispiele

Eine Mischung aus 95 Gew-% bis 60 Gew-% PPSU und 40 Gew% bis 5 Gew% PTFE wurde folgendermaßen compoundiert:
In einem Doppelschneckenextruder (Hersteller und Modellbezeichnung: Werner & Pfleiderer ZSK25 WLE (K4)) wird das PPSU aufgeschmolzen und entgast, das PTFE wird über eine seitliche Einspeiseöffnung zugeführt. Als PPSU wurde Radel R-5000 und als PTFE Zonyl MP 1300 verwendet.

| | **Beispiel 1** | **Vergleichs-beispiel 1** | **Vergleichs-beispiel 2** |
|---|---|---|---|
| **PPSU (Gew.%)** | 95 | 80 | 60 |
| **PTFE (Gew.%)** | 5 | 20 | 40 |
| **Zylinder-Temperatur (°C)** | 380 | 380 | 380 |
| **Drehzahl (U/min)** | 250 | 250 | 250 |
| **Drehmoment** | 62 % | 36 % | 37 % |
| **Vakuum (mbar abs.)** | 600 | 600 | 600 |
| **Schmelzdruck (bar)** | 54 | 33 | 30 |

Das erhaltene Compound wurde granuliert.

Die erfindungsgemäße Platte kann in an sich bekannter Weise durch Extrusion aus dem im ersten Schritt erhaltenen Granulat hergestellt werden.

Dazu wird thermisch plastifizierte Schmelze bei der Einfachextrusion über einen bzw. bei der Coextrusion über mehrere Extruder erzeugt und in ein Extrusionswerkzeug eingespeist. Zwischen Extruder und Extrusionsdüse können in an sich bekannter Weise zusätzliche Vorrichtungen wie z. B. eine Schmelzepumpe und/oder ein Schmelzefilter angeordnet sein. Die extrudierten Bahnen können anschließend einem Glättwerk oder einer Kalibriereinrichtung zugeführt werden.

Das Granulat wurde erneut aufgeschmolzen und zu Bändern mit den Abmessungen 1.000 mm Länge, 150 mm Breite und 1,5 mm Dicke extrudiert. Die Schmelzetemperatur betrug ca. 385 Grad Celsius.

Vergleichsbeispiel 3: Wie Beispiel 1 mit Drehzahl von 200 min⁻¹. In diesem Fall war das Drehmoment so hoch, dass keine gleichmäßige Extrusion mehr möglich war.

Vergleichsbeispiel 4: Wie Beispiel 1 bei einer Extrusionstemperatur von 320 °C. Am resultierenden Granulat war bereits optisch eine Phasenseparation feststellbar.

### Extrusion

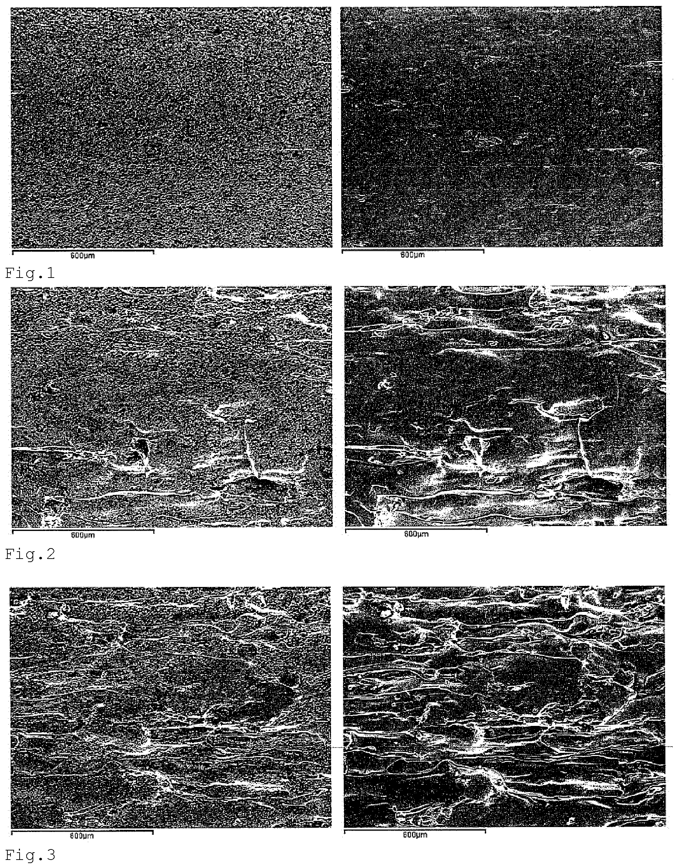

Die aus Beispiel 1 sowie Vergleichsbeispielen 1 bis 2 resultierenden Granulate werden bei 380 °C zu einem Band extrudiert. In den Zeichnungen Fig.1 bis 4 erkennt man die Unterschiede bezüglich einer Phasenseparation zwischen erfindungsgemäß hergestellten und nicht erfindungsgemäß hergestellten Blends.

Die resultierenden Blends der ersten Extrusion wurden mikroskopisch untersucht, um die jeweilig vorliegende Mikrophasenseparation zu bestimmen. Dazu wurden jeweils SEM/EDS Messungen durchgeführt. Bei der SEM handelt es sich um eine "Scanning Electron Microscopy" oder im deutschen REM (Rasterelektronenmikroskopie). Bei der EDS handelt es sich um die "Energy Dispersive X-ray Spectroscopy". Beide Messungen wurden an der Granulatoberfläche durchgeführt. Die SEM-Messungen sind jeweils rechts abgebildet.

Im Vergleich der Fig.1 als erfindungsgemäß zu den nicht erfindungsgemäßen Fig.2 und Fig.3 erkennt man, dass die PTFE-Phasen (hell) deutlich kleiner sind. Damit ist eine bessere Homogenisierung, die in einer höheren mechanischen Festigkeit resultiert, erreicht worden.
Die Materialien gemäß Vergleichsbeispiel 1 und 2 weisen dagegen vor allem in Extrusionsrichtung lange und relativ große PTFE-Phasen auf, die nach der Weiterverarbeitung zu einer erhöhten Instabilität der Bänder führen.

### Zeichnungen

Fig.1: SEM- (rechts) und EDS-Aufnahme(links)eines Granulats aus Beispiel 1
Fig.2: SEM- und EDS-Aufnahme eines Granulats aus Vergleichsbeispiel 1
Fig.3: SEM- und EDS-Aufnahme eines Granulats aus Vergleichsbeispiel 2

## Patentansprüche

1. Verfahren zur Herstellung von Kunststoffkörpern aus Polyphenylsulfon (PPSU) und Polytetrafluoretylen (PTFE),**dadurch gekennzeichnet, dass**
der Gehalt der Mischung an PTFE zwischen 4,0 Gew% und 6,0 Gew.- % beträgt dass
der Gehalt der Mischung an PPSU zwischen 94,0 Gew% und 96,0 Gew% beträgt,
dass das PTFE vor der Extrusion einen Anteil von 8 bis 12 Vol% mit einer Partikelgröße kleiner 3 µm und einen Anteil von mindestens 88 Vol% mit einer Partikelgröße kleiner 25 µm aufweist,
und dass das PTFE und das PPSU bei einer Temperatur zwischen 340 °C und 390 °C in einem Extruder bei einem Umgebungsdruckdruck zwischen 500 und 700 mbar, einer Drehzahl zwischen 220 und 270 min-1, einer Schneckentemperatur zwischen 340 und 390 °C und einem Drehmoment zwischen 50% und 80% gemischt und in einem zweiten Extruder zu Kunststoffformkörpern verarbeitet werden.

2. Verfahren gemäß Anspruch 1, **dadurch gekennzeichnet, dass**
das PTFE eine spezifische Oberfläche zwischen 1,5 und 3,0 m²/g aufweist.

3. Verfahren nach einem der Ansprüche 1 oder 2, **dadurch gekennzeichnet, dass**
der Gehalt der Mischung an PTFE zwischen 4,5 Gew% und 5,5 Gew% beträgt und dass
der Gehalt der Mischung an PPSU zwischen 95,5 Gew% und 94,5 Gew% beträgt.

4. Verfahren nach mindestens einem der Ansprüche 1 bis 3, **dadurch gekennzeichnet, dass**
man die beiden Kunststoffe PPSU und PTFE bei einer Temperatur zwischen 345 und 385 °C in einem ersten Extruder miteinander mischt und dass man das nach der ersten Extrusion erhaltene Granulat in einem Einschneckenextruder zu Kunststoffformkörpern extrudiert.

5. Verfahren nach mindestens einem der Ansprüche 1 bis 5, **dadurch gekennzeichnet, dass** man das Granulat bei einer Schneckentemperatur zwischen 345 und 390 °C zu Kunststoffformkörpern extrudiert.

6. Verwendung von Kunststoffformkörpern hergestellt nach einem Verfahren gemäß mindestens einem der Ansprüche 1 bis 5 zur Herstellung von Anti-Wear-Tapes.

7. Verwendung von Anti-Wear-Tapes gemäß Anspruch 6 in Leitungen für Fluids.

## Claims

1. Process for producing plastics products made of polyphenyl sulphone (PPSU) and polytetrafluoroethylene(PTFE), **characterized in that**
the PTFE content of the mixture is from 4.0% by weight to 6.0% by weight, that
the PPSU content of the mixture is from 94.0% by weight to 96.0% by weight,
that prior to the extrusion process the proportion of PTFE with a particle size smaller than 3 µm is from 8 to 12% by volume and the proportion of PTFE with a particle size smaller than 25 µm is at at least 88% by volume,
and that the PTFE and the PPSU are mixed in an extruder at a temperature of from 340°C to 390°C at an ambient pressure of from 500 to 700 mbar, at a rotation rate of from 220 to 270 min⁻¹, at a screw temperature of from 340 to 390°C and at a torque of from 50% to 80%, and are processed in a second extruder to give plastics mouldings.

2. Process according to Claim 1, **characterized in that**
the specific surface area of the PTFE is from 1.5 to 3.0 m²/g.

3. Process according to Claim 1 or 2, **characterized in that**
the PTFE content of the mixture is from 4.5% by weight to 5.5% by weight and that
the PPSU content of the mixture is from 95.5% by weight to 94.5% by weight.

4. Process according to at least one of Claims 1 to 3, **characterized in that**
the two plastics PPSU and PTFE are mixed with one another at a temperature of from 345 to 385°C in a first extruder and that the pellets obtained after the first extrusion process are extruded in a single-screw extruder to give plastics mouldings.

5. Process according to at least one of Claims 1 to 4, **characterized in that** the pellets are extruded at a screw temperature of from 345 to 390°C to give plastics mouldings.

6. Use of plastics mouldings produced by a process according to at least one of Claims 1 to 5 for producing anti-wear tapes.

7. Use of anti-wear tapes according to Claim 6 in pipes for fluids.

## Revendications

1. Procédé de fabrication de corps en plastique à base de polyphénylsulfone (PPSU) et de polytétrafluoroéthylène (PTFE), **caractérisé en ce que**
la teneur du mélange en PTFE est comprise entre 4,0 % en poids et 6,0 % en poids,
la teneur eu mélange en PPSU est comprise entre 94,0 % en poids et 96,0 % en poids,
le PTFE présente avant l'extrusion une proportion de 8 à 12 % en volume ayant une taille de particule inférieure à 3 µm et une proportion d'au moins 88 % en volume ayant une taille de particule inférieure à 25 µm,
et le PTFE et le PPSU sont mélangés à une température comprise entre 340 °C et 390 °C dans une extrudeuse à une pression ambiante comprise entre 500 et 700 mbar, une vitesse de rotation comprise entre 220 et 270 min⁻¹, une température de vis comprise entre 340 et 390 °C et un moment de rotation compris entre 50 % et 80 %, et usinés dans une deuxième extrudeuse en corps moulés en plastique.

2. Procédé selon la revendication 1, **caractérisé en ce que** le PTFE présente une surface spécifique comprise entre 1,5 et 3,0 m²/g.

3. Procédé selon l'une quelconque des revendications 1 ou 2, **caractérisé en ce que** la teneur du mélange en PTFE est comprise entre 4,5 % en poids et 5,5 % en poids, et **en ce que** la teneur du mélange en PPSU est comprise entre 95,5 % en poids et 94,5 % en poids.

4. Procédé selon au moins l'une quelconque des revendications 1 à 3, **caractérisé en ce que** les deux plastiques PPSU et PTFE sont mélangés l'un avec l'autre à une température comprise entre 345 et 385 °C dans une première extrudeuse, et **en ce que** le granulat obtenu après la première extrusion est extrudé dans une extrudeuse monovis en corps moulés en plastique.

5. Procédé selon au moins l'une quelconque des revendications 1 à 5, **caractérisé en ce que** le granulat est extrudé à une température de vis comprise entre 345 et 390 °C en corps moulés en plastique.

6. Utilisation de corps moulés en plastique fabriqués par un procédé selon au moins l'une quelconque des revendications 1 à 5 pour la fabrication de bandes anti-usure.

7. Utilisation de bandes anti-usure selon la revendication 6 dans des conduites pour fluides.
